# EUROPEAN PATENT SPECIFICATION

(11) **EP 3 866 065 B1**
(45) Date of publication and mention of the grant of the patent: **12.07.2023**
(21) Application number: 21156512.2
(22) Date of filing: 11.02.2021
(51) Int. Cl.: G06V 20/58, G06T 7/246

(54) **TARGET DETECTION METHOD, DEVICE AND STORAGE MEDIUM**
ZIELERKENNUNGSVERFAHREN, VORRICHTUNG UND SPEICHERMEDIUM
PROCÉDÉ DE DÉTECTION DE CIBLE, DISPOSITIF ET SUPPORT DE MÉMOIRE

(30) Priority: 13.02.2020 CN 202010090507
(43) Date of publication of application: 18.08.2021
(73) Proprietor: Apollo Intelligent Connectivity (Beijing) Technology Co., Ltd., Beijing 100176 (CN)
(72) Inventor: ZHU, Xiaoxing, Haidian District, Beijing 100085 (CN); YANG, Fan, Haidian District, Beijing 100085 (CN); WANG, Chengfa, Haidian District, Beijing 100085 (CN); SUN, Yongyi, Haidian District, Beijing 100085 (CN)
(74) Representative: Botti & Ferrari S.p.A.

(56) References cited:
- WO-A1-2016/174472
- WO-A1-2018/024600
- CN-A- 108 596 944
- CN-A- 109 583 391

## Description

### TECHNICAL FIELD

The present application relates to a field of computer vision technology, and in particular, to a target detection method and device, and a storage medium.

### BACKGROUND

In existing technologies, a detection of a target relies on an identification of a single image. A detection target is obtained based on a target identification algorithm. Due to restrictions of the target identification algorithm itself or of its training level, false detections or missing detections and the like may occur, resulting in a low detection accuracy of a target.

International patent application WO2018024600A1 discloses a method for capturing an object (9) in an environmental region (8) of a motor vehicle (1) based on a sequence of images.

CN108596944A discloses a method for extracting a moving target using a weighted sum of confidence degrees.

### SUMMARY

A target detection method and device, and a storage medium are provided according to embodiments of the present application, so as to solve one or more technical problems in the existing technology.

In a first aspect, a target detection method is provided according an embodiment of the present application. The method includes:
determining first images from a plurality of images, wherein a candidate target is contained in the first images, wherein the plurality of images comprise continuous images of a time sequence;
acquiring confidence degrees of the candidate target in respective first images;
calculating an appearance probability of the candidate target according to weights of the respective first images and the confidence degrees, wherein a weight of each first image is set according to at least one of proximity of the first image to current time and a number of candidate targets detected in the first image, wherein the calculating the appearance probability of the candidate target includes:
performing respective multiplications on the weights of the respective first images with the confidence degrees of the candidate target in corresponding first images, to obtain first appearance probabilities of the candidate target in the respective first images; and
adding the first appearance probabilities of the candidate target in the respective first images, to obtain the appearance probability of the candidate target; and
determining the candidate target with the appearance probability meeting a first preset condition, as a final target.

By applying the above scheme, a candidate target may be comprehensively determined by using a detection result of a plurality of images, thereby determining a detected final target. Since not only a single image is used for detection to obtain a final target, the detection accuracy of the final target may be improved.

Further, by applying the above scheme, the appearance probability of a candidate target may be objectively reflected based on weights of detected images in which the candidate target contained and confidence degrees of the candidate target in corresponding images.

In an implementation, the method further includes:
predicting an appearance position of the final target in a last image among the plurality of images by calculating a movement speed of the final target in adjacent images among the plurality of images according to a change of positions of the final target in the respective first images and a time interval between the adjacent images among the plurality of images, in a case that the final target is not contained in the last image.

By applying the above scheme, even if a final target is not detected in a last image among a plurality of images, the position of the final target in the last image may still be calculated according to a detected movement speed of the final target in other images. It is achieved that a position of a final target in a last image is determined relatively accurately.

In an implementation, determining the candidate target includes:
determining, for any target in any one of images, the target with a confidence degree meeting a second preset condition, as the candidate target.

By applying the above scheme, a candidate target may be relatively accurately identified.

By applying the above scheme, when there is a displacement of a target in different images, an accurate determination of a candidate target may still be achieved.

In a second aspect, a target detection device is provided according to an embodiment of the present application. The device includes:
an image determination module, configured to determine first images from a plurality of images, wherein a candidate target is contained in the first images, wherein the plurality of images comprise continuous images of a time sequence;
a confidence degree acquisition module, configured to acquire confidence degrees of the candidate target in respective first images;
an appearance probability calculation module, configured to calculate an appearance probability of the candidate target according to weights of the respective first images and the confidence degrees, wherein a weight of each first image is set according to at least one of proximity of the first image to current time and a number of candidate targets detected in the first image, wherein the appearance probability calculation module includes:
a first appearance probability calculation submodule, configured to perform respective multiplications on the weights of the respective first images with the confidence degrees of the candidate target in corresponding first images, to obtain first appearance probabilities of the candidate target in the respective first images; and
an appearance probability calculation execution submodule, configured to add the first appearance probabilities of the candidate target in the respective first images, to obtain the appearance probability of the candidate target; and
a final target determination module, configured to determine the candidate target with the appearance probability meeting a first preset condition, as a final target.

In an implementation, the device further includes:
a position prediction module, configured to predict an appearance position of the final target in a last image among the plurality of images by calculating a movement speed of the final target in adjacent images among the plurality of images according to a change of positions of the final target in the respective first images and a time interval between the adjacent images among the plurality of images, in a case that the final target is not contained in the last image.

In an implementation, the device further includes:
a candidate target determination module, configured to determining, for any target in any one of images, the target with a confidence degree meeting a second preset condition, as the candidate target.

In a third aspect, a non-transitory computer readable storage medium for storing computer instructions is provided according to an embodiment of the present application. The computer instructions, when executed by a computer, cause the computer to perform the method provided in any embodiment of the present application.

In a fourth aspect, a computer program product including computer program instructions is provided according to an embodiment of the present application. The computer program instructions, when executed by a computer, cause the computer to perform the method provided in any embodiment of the present application.

Other effects of the above alternatives will be described below in combination with specific embodiments.

### BRIEF DESCRIPTION OF THE DRAWINGS

The drawings are used to better understand the scheme and do not constitute a limitation to the present application, wherein:
FIG. 1 is a flowchart showing a target detection method according to an embodiment of the present application;
FIG. 2 is a flowchart showing a target detection method according to an embodiment of the present application;
FIG. 3 is a flowchart showing a target detection method according to an embodiment of the present application;
FIG. 4 is a block diagram showing a target detection device according to an embodiment of the present application;
FIG. 5 is a block diagram showing a target detection device according to an embodiment of the present application;
FIG. 6 is a block diagram showing a target detection device according to an embodiment of the present application; and
FIG. 7 is a block diagram showing an electronic apparatus for implementing a target detection method according to an embodiment of the present application.

### DETAILED DESCRIPTION

The exemplary embodiments of the application will be described below in combination with drawings, including various details of the embodiments of the application to facilitate understanding, which should be considered as exemplary only. Therefore, descriptions of well-known functions and structures are omitted in the following description for clarity and conciseness.

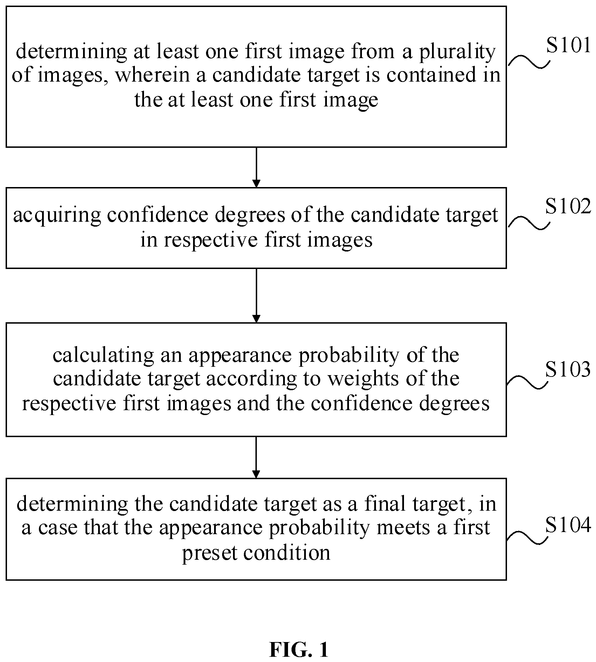

A target detection method is provided according to the present application. As shown in FIG. 1, in an implementation, the target detection method includes the following steps:
S101: determining at least one first image from a plurality of images, wherein a candidate target is contained in the at least one first image;
S 102: acquiring confidence degrees of the candidate target in respective first images;
S103: calculating an appearance probability of the candidate target according to weights of the respective first images and the confidence degrees; and
S104: determining the candidate target as a final target, in a case that the appearance probability meets a first preset condition.

A candidate target may include a vehicle, a pedestrian, a pet, a good, and the like. Continuous frames of images may be continuously collected using an image collection device, and a time interval of each frame of image among the continuous frames of images may be the same. A plurality of frames of images with a time sequence may be selected by using a sliding window, and then a target detection is performed on the plurality of selected frames of images.

Taking a vehicle as the candidate target as an example, the image collection device may be a traffic probe. A candidate target that appears in a plurality of frames of images collected by an image collection device may be detected using a vehicle identification algorithm. In a case that it is confirmed that a candidate target is detected in a current frame of image, a confidence degree of the candidate target in the current frame of image may be obtained. For example, three targets, which are a vehicle, a pedestrian, and a tree, are detected in a current frame of image using a vehicle identification algorithm. Among them, the confidence degree of the vehicle is 0.9, the confidence degree of the pedestrian is 0.1, and the confidence degree of the tree is 0.06. By setting a confidence degree threshold in advance (for example, the confidence degree threshold is set to 0.75), in a case that a confidence degree of a target identified by the vehicle recognition algorithm is not lower than the confidence degree threshold, the identified target may be determined as a candidate target. For a target with a confidence degree less than the confidence degree threshold, the target may be ignored (the confidence degree is set to 0). In the above example, because the confidence degree of the vehicle is higher than the confidence degree threshold and the confidence degree of the pedestrian and of the tree is less than the confidence degree threshold, it may be determined that the vehicle detected by the vehicle identification algorithm is a candidate target in the current frame of image.

The weight of each frame of image may be set according to time. For example, the weight of each frame of image may be set according to the proximity to current time. An image with closest proximity to current time may be set with a highest weight. In addition, the weight may also be set according to other factors such as the number of candidate targets detected in each frame of image, for example, an image in which a larger number of candidate targets are detected may be set with a lower weight. Alternatively, the weight may be set based on a combination of factors such as time or the number of the candidate targets.

For example, a plurality of frames of images may be five images, and no candidate target is detected in the first and the fifth images. A candidate target is detected in each of the remaining three images, respectively. In this case, the appearance probability of the candidate target may be obtained according to the weights of the remaining three images and the confidence degrees of the candidate target in the remaining three images.

For another example, in a case that the plurality of frames of images are five images, a candidate target is detected only in the first image. The appearance probability of the candidate target may be obtained according to the weight of the first image and the confidence degree of the candidate target in the first image.

In a case that the appearance probability meets a first preset condition, a candidate target is taken as a detected final target. The first preset condition may be that the appearance probability is greater than a first predetermined threshold, or not less than the first predetermined threshold, and the like.

A plurality of candidate targets may be detected in one image, and determination manners of whether each candidate target may be taken as a final target are the same. In the present embodiment, a determination process of only one candidate target is taken as an example for illustration.

By applying the above scheme, a candidate target may be comprehensively determined by using a detection result of a plurality of images, thereby determining a detected final target. Each time a sliding window slides, the detection of a final target may be updated once. Since not only a single image is used for detection to obtain a final target, the detection accuracy of the final target may be improved.

In an implementation, the method further includes:
predicting an appearance position of the final target in a last image among the plurality of images according to a change of positions of the final target in the respective first images and a time interval between adjacent images, in a case that the final target is not contained in the last image.

A last frame among a plurality of frames of images may be used as a reference frame for an output result. The output result may be a position where a final target appears in the last image, or a position of the final target in a world coordinate system which is obtained according to a position where the final target appears in the last image.

As in the foregoing example, five images are included, and no candidate target is detected in the first and the fifth images. Through determination, the candidate target may be taken as a detected final target. Since the final target (the candidate target) is not contained in the last (the fifth) image, it is required to predict the position of the final target in the last image according to a change of positions of the final target in the remaining three images. For example, any two adjacent frames of images where the candidate target is detected may be selected. A displacement of the candidate target in the selected two adjacent frames of images and the time interval of the selected two adjacent frames of images are acquired, so that a movement speed of the candidate target in the two adjacent frames of images may be calculated. And then the position that the candidate target appears in the last image may be predicted.

Alternatively, a position of a candidate target in a last image may also be predicted according to an average value of a change of positions obtained by using the three images in which the candidate target is detected. For example, a first position of the candidate target in the second frame of image and a second position of the candidate target in the fourth frame of image are acquired. The change of positions of the candidate target in the three images is obtained according to the first position and the second position. An average movement speed of the candidate target in the three images may be calculated by taking the time interval from the second frame of image to the fourth frame of image into account. Therefore, the position where the candidate target appears in the last image is predicted.

By applying the above scheme, even if a final target is not detected in a last image among a plurality of images, a position of the final target in the last image may still be calculated according to a detected movement speed of the final target in other images. It is achieved that a position of a final target in a last image is determined relatively accurately.

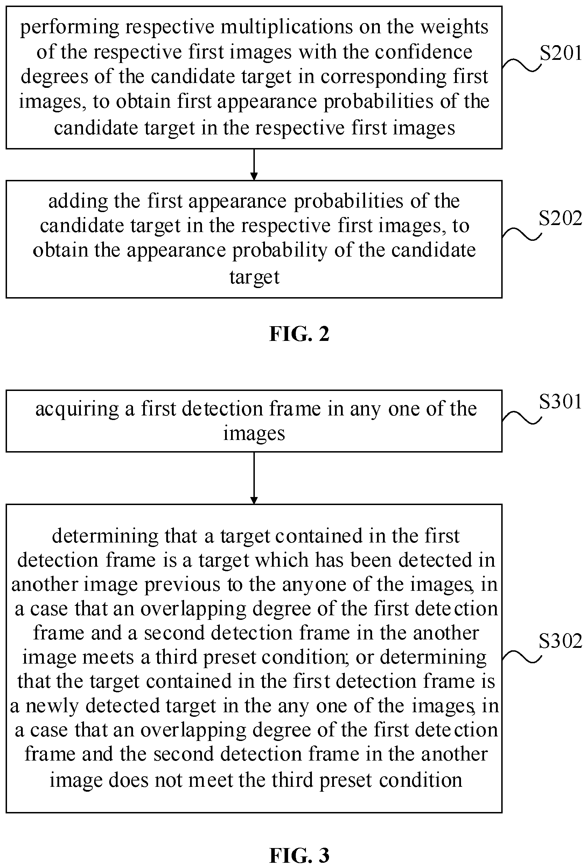

As shown in FIG. 2, in an implementation, the calculating the appearance probability of the candidate target includes:
S201: performing respective multiplications on the weights of the respective first images with the confidence degrees of the candidate target in corresponding first images, to obtain first appearance probabilities of the candidate target in the respective first images.
S202: adding the first appearance probabilities of the candidate target in the respective first images, to obtain the appearance probability of the candidate target.

As in the foregoing example, five frames of images are included, and no candidate target is detected in the first and the fifth images. That is, a candidate target is detected in a total of three images, which are images from the second image to the fourth image.

Weights of the above three images are obtained, respectively, which are recorded as: Q₂, Q₃, Q₄.

Confidence degrees of the candidate target in the above three images are denoted, respectively, as: C₂, C₃ and C₄.

First appearance probabilities of the candidate target in the above three images are denoted, respectively, as: P₂, P₃ and P₄, where P₂=Q₂^{∗}C₂, P₃=Q₃^{∗}C₃, and P₄=Q₄^{∗}C₄.

The appearance probability of the candidate target may be expressed as P, where P=P₂+P₃+P₄.

By applying the above scheme, the appearance probability of the candidate target may be objectively reflected based on weights of respective images and confidence degrees.

In an implementation, determining the candidate target includes:
determining, for any target in any one of images, the target as a candidate target in a case that a confidence degree of the target meets a second preset condition.

In images collected by an image collection device, multiple kinds of targets may be included, such as a vehicle, a pedestrian, a pet, a green plant, and the like. Taking a vehicle as the candidate target as an example, a target in an image may be identified by using a vehicle identification algorithm, and for each target, one confidence degree may be correspondingly obtained.

The second preset condition may be that the confidence degree is greater than a second predetermined threshold, or not less than the second predetermined threshold, and the like. Only in the case that a confidence degree satisfies a second preset condition, it may be determined that a corresponding target is a candidate target, that is, it may be determined that a vehicle is identified.

By applying the above scheme, a candidate target may be relatively accurately identified.

As shown in FIG. 3, in an implementation, determining the target includes:
S301: acquiring a first detection frame in any one of the images.
S302: determining that a target contained in the first detection frame is a target which has been detected in another image previous to the any one of the images, in a case that an overlapping degree of the first detection frame and a second detection frame in the another image meets a third preset condition; or determining that the target contained in the first detection frame is a newly detected target in the any one of the images, in a case that an overlapping degree of the first detection frame and the second detection frame in the another image does not meet the third preset condition.

Specifically, in a plurality of frames of images included in a sliding window, in the case that a target is detected in any one of images, a first detection frame corresponding to the target may be generated. For example, assuming that the any one of images is the N-th image, a detection may be performed starting from the N-1-th image forward. A second detection frame in the N-1-th image is acquired. An overlapping degree comparison is made between the first detection frame and the second detection frame. The detection does not stop until it is detected that the overlapping degree of the first detection frame and the second detection frame satisfies a third preset condition.

The third preset condition may include that the overlapping degree is greater than a third predetermined threshold, or not less than the third predetermined threshold, and the like.

In the case that the overlapping degree of the first detection frame and the second detection frame satisfies a third preset condition, it indicates that the target has appeared in another image previous to the current frame, and thus the target may be tracked. The tracking manner may include labelling a same target in different images by using a same mark.

In another aspect, in the case that an overlapping degree of the first detection frame and the second detection frame does not satisfy a third preset condition, it may be determined that the target contained in the first detection frame is a newly detected target in the any one of images. For the newly detected target, it may be labeled by using a new mark.

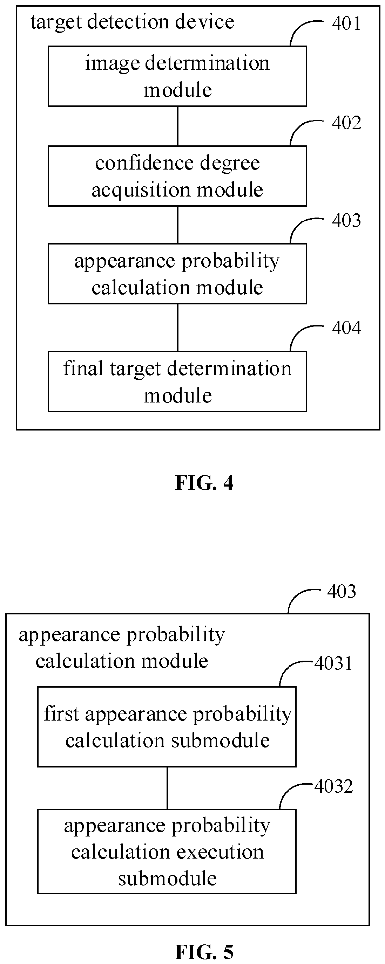

A target detection device is provided according to the present application. As shown in FIG. 4, in an implementation, the target detection device includes the following components:
an image determination module 401, configured to determine at least one first image from a plurality of images, wherein a candidate target is contained in the at least one first image;
a confidence degree acquisition module 402, configured to acquire confidence degrees of the candidate target in respective first images;
an appearance probability calculation module 403, configured to calculate an appearance probability of the candidate target according to weights of the respective first images and the confidence degrees;
a final target determination module 404, configured to determine the candidate target as a final target, in a case that the appearance probability meets a first preset condition.

In an implementation, the device may further include:
a position prediction module, configured to predict an appearance position of the final target in a last image among the plurality of images according to a change of positions of the final target in the respective first images and a time interval between adjacent images, in a case that the final target is not contained in the last image.

As shown in FIG. 5, in an implementation, the appearance probability calculation module 403 includes:
a first appearance probability calculation submodule 4031, configured to perform respective multiplications on the weights of the respective first images with the confidence degrees of the candidate target in corresponding first images, to obtain first appearance probabilities of the candidate target in the respective first images;
an appearance probability calculation execution submodule 4032, configured to add the first appearance probabilities of the candidate target in the respective first images, to obtain the appearance probability of the candidate target.

In an implementation, the device further includes:
a candidate target determination module, configured to determining, for any target in any one of images, the target as a candidate target in a case that a confidence degree of the target meets a second preset condition.

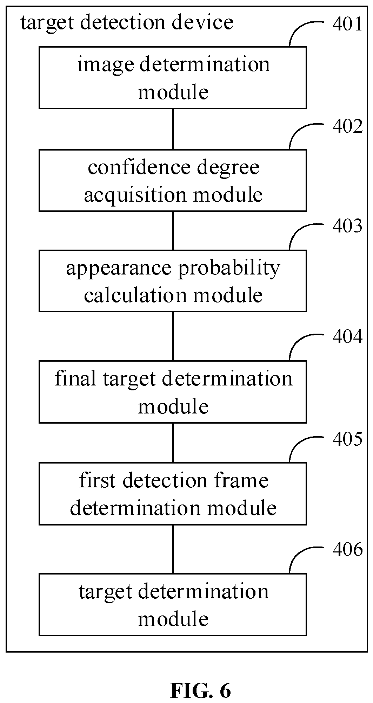

As shown in FIG. 6, in an implementation, the device further includes:
a first detection frame determination module 405, configured to acquire a first detection frame in any one of the images; and
a target determination module 406, configured to determine that the target contained in the first detection frame is a target which has been detected in another image previous to the any one of the images, in a case that an overlapping degree of the first detection frame and a second detection frame in the another image meets a third preset condition; or determining that the target contained in the first detection frame is a newly detected target in the any one of the images, in a case that an overlapping degree of the first detection frame and the second detection frame in the another image does not meet the third preset condition.

The function of each module in each device of the embodiment of the present application may refer to corresponding descriptions in the above method, which will not be repeated here.

According to an embodiment of the present application, an electronic apparatus and a readable storage medium are provided in the present application.

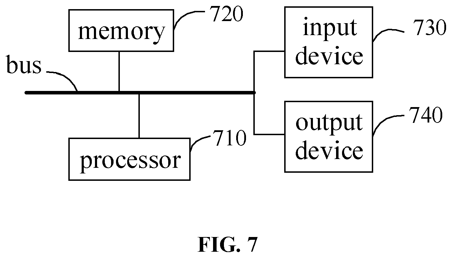

As shown in FIG. 7, it is a block diagram of an electronic apparatus for implementing a target detection method according to an embodiment of the present application. Electronic apparatuses are intended to represent various forms of digital computers, such as laptop computers, desktop computers, workbenches, personal digital assistants, servers, blade servers, mainframe computers, and other suitable computers. Electronic apparatuses may also represent various forms of mobile devices, such as personal digital assistants, cellular phones, smart phones, wearable devices, and other similar computing devices. The components shown herein, their connections and relationships, and their functions are merely examples, and are not intended to limit the implementation of the present application described and/or claimed herein.

As shown in FIG. 7, the electronic apparatus includes: one or more processors 710, a memory 720, and interfaces for connecting various components, including a high-speed interface and a low-speed interface. The various components are connected to each other using different buses and may be installed on a common motherboard or installed in other ways as needed. The processor may process instructions executed within the electronic apparatus, including instructions which are stored in the memory or on the memory to display graphic information of a graphical user interface (GUI) on an external input/output device (such as a display apparatus coupled to the interface). In other embodiments, multiple processors and/or multiple buses may be used with multiple memories if desired. Similarly, multiple electronic apparatuses may be connected, and each apparatus provides a part of necessary operations (for example, as a server array, a group of blade servers, or a multi-processor system). In FIG. 7, one processor 710 is taken as an example.

The memory 720 is a non-transitory computer readable storage medium provided by the present application. The memory stores instructions executable by at least one processor, so that the at least one processor executes the target detection method provided by the present application. The non-transitory computer readable storage medium of the present application stores computer instructions, which are used to cause the computer to perform the target detection method provided by the present application.

The memory 720, as a non-transitory computer readable storage medium, may be used to store non-transitory software programs, non-transitory computer executable programs and modules, such as program instructions/modules (for example, the image determination module 401, the confidence degree acquisition module 402, the appearance probability calculation module 403, and the final target determination module 404 shown in FIG. 4) corresponding to the target detection method in embodiments of the present application. The processor 710 executes various functional applications and data processing of the server by executing the non-transitory software programs, instructions, and modules stored in the memory 720, that is, implements the target detection method in foregoing method embodiments.

The memory 720 may include a storage program area and a storage data area, where the storage program area may store an operating system and application programs required by at least one function, and the storage data area may store the data created according to the use of the electronic apparatus for the target detection, etc. In addition, the memory 720 may include a high-speed random access memory, and may also include a non-transitory memory, such as at least one magnetic disk storage device, a flash memory device, or other non-transitory solid-state storage devices. In some embodiments, the memory 720 may optionally include memories set remotely relative to the processor 710, and these remote memories may be connected to the electronic apparatus for the target detection through a network. Instances of the above network include but are not limited to the Internet, an intranet, a local area network, a mobile communication network, and combinations thereof.

The electronic apparatus of the target detection method may further include: an input device 730 and an output device 740. The processor 710, the memory 720, the input device 730 and the output device 740 may be connected through a bus or in other ways, In FIG. 7, the connection through a bus is taken as an example.

The input device 730, such as a touch screen, a keypad, a mouse, a trackpad, a touchpad, an indication rod, one or more mouse buttons, a trackball, a joystick, etc. may receive input numeric or character information, and generate key signal inputs related to user settings and function control of the electronic apparatus for the target detection method. The output device 740 may include a display apparatus, an auxiliary lighting device (for example, LED), a tactile feedback device (for example, a vibration motor), and the like. The display apparatus may include, but is not limited to, a liquid crystal display (LCD), a light emitting diode (LED) display, and a plasma display. In some embodiments, the display apparatus may be a touch screen.

Various embodiments of the systems and techniques described herein may be implemented in digital electronic circuit systems, integrated circuit systems, application specific integrated circuits (ASICs), computer hardware, firmware, software, and/or combination thereof. These various embodiments may include: implementations in one or more computer programs which may be executed and/or interpreted on a programmable system that includes at least one programmable processor, which may be a dedicated or general-purpose programmable processor that may receive data and instructions from a storage system, at least one input device, and at least one output device, and transmit the data and instructions to the storage system, the at least one input device, and the at least one output device.

These computer programs (also called as programs, software, software applications, or codes) include machine instructions of programmable processors, and these computer programs may be implemented using a high-level process and/or object-oriented programming language, and/or an assembly/machine language. As used herein, the terms "machine readable medium" and "computer readable medium" refer to any computer program product, apparatus, and/or device (for example, a magnetic disk, an optical disk, a memory, a programmable logic device (PLD)) used to provide machine instructions and/or data to a programmable processor, including the machine readable medium that receives machine instructions as machine readable signals. The term "machine readable signal" refers to any signal used to provide machine instructions and/or data to the programmable processor.

In order to provide interactions with a user, the system and technology described herein may be implemented on a computer which has: a display device (for example, CRT (Cathode Ray Tube) or LCD (liquid crystal display) monitor) for displaying information to the user; and a keyboard and pointing device (for example, a mouse or a trackball) through which the user may provide input to the computer. Other kinds of devices may also be used to provide interactions with a user; for example, the feedback provided to a user may be any form of sensory feedback (for example, visual feedback, auditory feedback, or tactile feedback); and input from a user may be received using any form (including acoustic input, audio signal input, or tactile input).

The systems and techniques described herein may be implemented in a computing system (for example, as a data server) that includes back-end components, or a computing system (for example, an application server) that includes middleware components, or a computing system (for example, a user computer with a graphical user interface or a web browser through which the user may interact with the implementation of the systems and technologies described herein) that includes front-end components, or a computing system that includes any combination of such back-end components, intermediate components, or front-end components. The components of the system may be interconnected by any form or medium of digital data communication (for example, a communication network). Examples of communication networks include: a Local Area Network (LAN), a Wide Area Network (WAN), and the Internet.

The computer system may include a client and a server. The client and the server are generally remote from each other and typically interact through a communication network. The client-server relationship is generated by computer programs that run on respective computers and have a client-server relationship with each other.

It should be understood that various forms of processes shown above may be used to reorder, add, or delete steps. For example, respective steps described in the present application may be executed in parallel, or may be executed sequentially, or may be executed in a different order, as long as the desired result of the technical solution disclosed in the present application can be achieved, no limitation is made herein.

The above specific embodiments do not constitute a limitation on the protection scope of the present application.

## Claims

1. A target detection method, comprising:
determining (S101) first images from a plurality of images, wherein a candidate target is contained in the first images, wherein the plurality of images comprise continuous images of a time sequence;
acquiring (S102) confidence degrees of the candidate target in respective first images;
calculating (S103) an appearance probability of the candidate target according to weights of the respective first images and the confidence degrees, wherein a weight of each first image is set according to at least one of proximity of the first image to current time and a number of candidate targets detected in the first image, wherein the calculating (S103) the appearance probability of the candidate target comprises:
performing (S201) respective multiplications on the weights of the respective first images with the confidence degrees of the candidate target in corresponding first images, to obtain first appearance probabilities of the candidate target in the respective first images; and
adding (S202) the first appearance probabilities of the candidate target in the respective first images, to obtain the appearance probability of the candidate target; and
determining (S104) the candidate target with the appearance probability meeting a first preset condition, as a final target.

2. The target detection method according to claim 1, further comprising:
predicting an appearance position of the final target in a last image among the plurality of images by calculating a movement speed of the final target in adjacent images among the plurality of images according to a change of positions of the final target in the respective first images and a time interval between the adjacent images among the plurality of images, in a case that the final target is not contained in the last image.

3. The target detection method according to claim 1 or 2, wherein determining the candidate target comprises:
determining, for any target in any one of images, the target with a confidence degree meeting a second preset condition, as the candidate target.

4. A target detection device, comprising:
an image determination module (401), configured to determine first images from a plurality of images, wherein a candidate target is contained in the first images, wherein the plurality of images comprise continuous images of a time sequence;
a confidence degree acquisition module (402), configured to acquire confidence degrees of the candidate target in respective first images;
an appearance probability calculation module (403), configured to calculate an appearance probability of the candidate target according to weights of the respective first images and the confidence degrees, wherein a weight of each first image is set according to at least one of proximity of the first image to current time and a number of candidate targets detected in the first image, wherein the appearance probability calculation module comprises:
a first appearance probability calculation submodule (4031), configured to perform respective multiplications on the weights of the respective first images with the confidence degrees of the candidate target in corresponding first images, to obtain first appearance probabilities of the candidate target in the respective first images; and
an appearance probability calculation execution submodule (4032), configured to add the first appearance probabilities of the candidate target in the respective first images, to obtain the appearance probability of the candidate target; and
a final target determination module (404), configured to determine the candidate target with the appearance probability meeting a first preset condition, as a final target.

5. The target detection device according to claim 4, further comprising:
a position prediction module, configured to predict an appearance position of the final target in a last image among the plurality of images by calculating a movement speed of the final target in adjacent images among the plurality of images according to a change of positions of the final target in the respective first images and a time interval between the adjacent images among the plurality of images, in a case that the final target is not contained in the last image.

6. The target detection device according to claims 4 or 5, further comprising:
a candidate target determination module, configured to determine, for any target in any one of images, the target with a confidence degree meeting a second preset condition, as the candidate target.

7. A non-transitory computer readable storage medium for storing computer instructions, wherein the computer instructions, when executed by a computer, cause the computer to implement the method of any one of claims 1 to 3.

8. A computer program product comprising computer program instructions, the computer program instructions, when executed by a computer, cause the computer to perform the method according to any one of claims 1 to 3.

## Patentansprüche

1. Zielerkennungsverfahren, umfassend:
Bestimmen (S101) erster Bilder aus einer Vielzahl von Bildern, wobei ein Zielkandidat in den ersten Bildern enthalten ist, wobei die Vielzahl von Bildern kontinuierliche Bilder einer Zeitsequenz umfasst;
Erfassen (S102) von Vertrauensgraden des Zielkandidaten in den jeweiligen ersten Bildern;
Berechnen (S103) einer Auftrittswahrscheinlichkeit des Zielkandidaten gemäß Gewichtungen der jeweiligen ersten Bilder und der Vertrauensgrade, wobei eine Gewichtung jedes ersten Bildes gemäß mindestens einem von Nähe des ersten Bildes zur aktuellen Zeit und einer Anzahl von Zielkandidaten, die in dem ersten Bild detektiert werden, eingestellt wird, wobei das Berechnen (S103) der Auftrittswahrscheinlichkeit des Zielkandidaten umfasst:
Durchführen (S201) jeweiliger Multiplikationen der Gewichte der jeweiligen ersten Bilder mit den Vertrauensgraden des Zielkandidaten in entsprechenden ersten Bildern, um erste Auftrittswahrscheinlichkeiten des Zielkandidaten in den jeweiligen ersten Bildern zu erhalten;
und
Addieren (S202) der ersten Auftrittswahrscheinlichkeiten des Zielkandidaten in den jeweiligen ersten Bildern, um die Auftrittswahrscheinlichkeit des Zielkandidaten zu erhalten; und Bestimmen (S104) des Zielkandidaten mit der Auftrittswahrscheinlichkeit, die eine erste voreingestellte Bedingung erfüllt, als ein endgültiges Ziel.

2. Das Zielerkennungsverfahren nach Anspruch 1, das ferner umfasst:
Vorhersagen einer Erscheinungsposition des endgültigen Ziels in einem letzten Bild aus der Vielzahl von Bildern durch Berechnen einer Bewegungsgeschwindigkeit des endgültigen Ziels in benachbarten Bildern aus der Vielzahl von Bildern gemäß einer Änderung der Positionen des endgültigen Ziels in den jeweiligen ersten Bildern und einem Zeitintervall zwischen den benachbarten Bildern aus der Vielzahl von Bildern, für den Fall, dass das endgültige Ziel nicht in dem letzten Bild enthalten ist.

3. Zielerkennungsverfahren nach Anspruch 1 oder 2, wobei die Bestimmung des Zielkandidaten Folgendes umfasst:
Bestimmen, für jedes Ziel in einem beliebigen Bild das Ziel mit einem Vertrauensgrad, der eine zweite voreingestellte Bedingung erfüllt, als Zielkandidat

4. Zielerfassungsvorrichtung, umfassend:
Ein Bildbestimmungsmodul (401), das konfiguriert ist, um erste Bilder aus einer Vielzahl von Bildern zu bestimmen, wobei ein Zielkandidat in den ersten Bildern enthalten ist, wobei die Vielzahl von Bildern kontinuierliche Bilder einer Zeitsequenz umfasst;
ein Vertrauensgrad-Erfassungsmodul (402), das so konfiguriert ist, dass es Vertrauensgrade des Zielkandidaten in den jeweiligen ersten Bildern erfasst;
ein Modul (403) zur Berechnung der Auftrittswahrscheinlichkeit das so konfiguriert ist, dass es eine Auftrittswahrscheinlichkeit des Zielkandidaten gemäß den Gewichtungen der jeweiligen ersten Bilder und den Vertrauensgraden berechnet, wobei eine Gewichtung jedes ersten Bildes gemäß mindestens einem von der Nähe des ersten Bildes zur aktuellen Zeit und einer Anzahl von Zielkandidaten, die in dem ersten Bild erkannt wurden, eingestellt wird, wobei das Modul zur Berechnung der Auftrittswahrscheinlichkeit Folgendes umfasst:
ein Submodul (4031) zur Berechnung der ersten Erscheinungswahrscheinlichkeit, das so konfiguriert ist, dass es jeweilige Multiplikationen der Gewichtungen der jeweiligen ersten Bilder mit den Vertrauensgraden des Zielkandidaten in den entsprechenden ersten Bildern durchführt, um erste Erscheinungswahrscheinlichkeiten des Zielkandidaten in den jeweiligen ersten Bildern zu erhalten; und
ein Submodul (4032) zur Berechnung der Erscheinungswahrscheinlichkeit, das so konfiguriert ist, dass es die ersten Erscheinungswahrscheinlichkeiten des Zielkandidaten in den jeweiligen ersten Bildern addiert, um die Erscheinungswahrscheinlichkeit des Zielkandidaten zu erhalten; und
ein Modul (404) zur Bestimmung eines endgültigen Ziels, das so konfiguriert ist, dass es das Kandidatenziel mit der Erscheinungswahrscheinlichkeit, die eine erste voreingestellte Bedingung erfüllt, als ein endgültiges Ziel bestimmt.

5. Zielerfassungsvorrichtung nach Anspruch 4, ferner umfassend:
Ein Positionsvorhersagemodul, das so konfiguriert ist, dass es eine Erscheinungsposition des endgültigen Ziels in einem letzten Bild aus der Vielzahl von Bildern vorhersagt, indem es eine Bewegungsgeschwindigkeit des endgültigen Ziels in benachbarten Bildern aus der Vielzahl von Bildern gemäß einer Änderung der Positionen des endgültigen Ziels in den jeweiligen ersten Bildern und einem Zeitintervall zwischen den benachbarten Bildern aus der Vielzahl von Bildern berechnet, falls das endgültige Ziel nicht in dem letzten Bild enthalten ist.

6. Zielerkennungsvorrichtung nach Anspruch 4 oder 5, ferner umfassend:
ein Modul zur Bestimmung von Zielkandidaten, das so konfiguriert ist, dass es für jedes Ziel in einem beliebigen Bild das Ziel mit einem Vertrauensgrad, der eine zweite voreingestellte Bedingung erfüllt, als Zielkandidat bestimmt.

7. Nicht-übertragbares, computerlesbares Speichermedium zum Speichern von Computerbefehlen, wobei die Computerbefehle, wenn sie von einem Computer ausgeführt werden, den Computer veranlassen, das Verfahren nach einem der Ansprüche 1 bis 3 zu implementieren.

8. Computerprogrammprodukt mit Computerprogrammanweisungen, wobei die Computerprogrammanweisungen, wenn sie von einem Computer ausgeführt werden, den Computer veranlassen, das Verfahren nach einem der Ansprüche 1 bis 3 durchzuführen.

## Revendications

1. Un procédé de détection de cible, comprenant :
le fait (S 101) de déterminer des premières images parmi une pluralité d'images, une cible candidate étant contenue dans les premières images, la pluralité d'images comprenant des images continues d'une séquence de temps,
le fait (S 102) d'acquérir des degrés de confiance de la cible candidate dans des premières images respectives ;
le fait (S 103) de calculer une probabilité d'apparition de la cible candidate en fonction des poids des premières images respectives et des degrés de confiance, un poids de chaque première image étant défini en fonction d'au moins une parmi la proximité de la première image avec l'heure courante et un nombre de cibles candidates détectées dans la première image, le calcul (S 103) de la probabilité d'apparition de la cible candidate comprenant :
le fait (S201) d'effectuer des multiplications respectives des poids des premières images respectives par les degrés de confiance de la cible candidate dans des premières images correspondantes, afin d'obtenir des premières probabilités d'apparition de la cible candidate dans les premières images respectives ; et
le fait (S202) d'additionner les premières probabilités d'apparition de la cible candidate dans les premières images respectives, afin d'obtenir la probabilité d'apparition de la cible candidate ; et
le fait (S 104) de déterminer en tant que cible finale la cible candidate dont la probabilité d'apparition satisfait à une première condition prédéfinie.

2. Le procédé de détection de cible selon la revendication 1, comprenant en outre :
le fait de prédire une position d'apparition de la cible finale dans une dernière image parmi la pluralité d'images en calculant une vitesse de déplacement de la cible finale dans des images adjacentes parmi la pluralité d'images en fonction d'un changement de positions de la cible finale dans les premières images respectives et un intervalle de temps entre les images adjacentes parmi la pluralité d'images, dans le cas où la cible finale n'est pas contenue dans la dernière image.

3. Le procédé de détection de cible selon la revendication 1 ou la revendication 2, dans lequel la détermination de la cible candidate comprend :
le fait, pour toute cible dans l'une quelconque des images, de déterminer en tant que cible candidate la cible ayant un degré de confiance remplissant une deuxième condition prédéfinie.

4. Un dispositif de détection de cible, comprenant :
un module (401) de détermination d'image, configuré pour déterminer des premières images à partir d'une pluralité d'images, une cible candidate étant contenue dans les premières images, la pluralité d'images comprenant des images continues d'une séquence de temps ;
un module (402) d'acquisition de degré de confiance, configuré pour acquérir des degrés de confiance de la cible candidate dans des premières images respectives ;
un module (403) de calcul de probabilité d'apparition, configuré pour calculer une probabilité d'apparition de la cible candidate en fonction des poids des premières images respectives et des degrés de confiance, un poids de chaque première image étant défini en fonction d'au moins une parmi la proximité de la première image avec l'heure courante et un nombre de cibles candidates détectées dans la première image, le module de calcul de probabilité d'apparition comprenant :
un premier sous-module (4031) de calcul de probabilité d'apparition, configuré pour effectuer des multiplications respectives des poids des premières images respectives par les degrés de confiance de la cible candidate dans les premières images correspondantes, afin d'obtenir des premières probabilités d'apparition de la cible candidate dans les premières images respectives ; et
un sous-module (4032) d'exécution de calcul de probabilité d'apparition, configuré pour additionner les premières probabilités d'apparition de la cible candidate dans les premières images respectives, afin d'obtenir la probabilité d'apparition de la cible candidate ; et
un module (404) de détermination de cible finale, configuré pour déterminer en tant que cible finale la cible candidate ayant la probabilité d'apparition satisfaisant une première condition prédéfinie.

5. Le dispositif de détection de cible selon la revendication 4, comprenant en outre :
un module de prédiction de position, configuré pour prédire une position d'apparition de la cible finale dans une dernière image parmi la pluralité d'images en calculant une vitesse de déplacement de la cible finale dans des images adjacentes parmi la pluralité d'images selon un changement de positions de la cible finale dans les premières images respectives et un intervalle de temps entre les images adjacentes parmi la pluralité d'images, dans le cas où la cible finale n'est pas contenue dans la dernière image.

6. Le dispositif de détection de cible selon les revendications 4 ou 5, comprenant en outre :
un module de détermination de cible candidate, configuré pour déterminer en tant que cible candidate, pour toute cible dans l'une quelconque des images, la cible ayant un degré de confiance satisfaisant à une deuxième condition prédéfinie.

7. Un support de stockage non transitoire lisible par ordinateur, pour stocker des instructions informatiques, les instructions informatiques, lorsqu'elles sont exécutées par un ordinateur, amenant l'ordinateur à mettre en oeuvre le procédé selon l'une quelconque des revendications 1 à 3.

8. Un produit de programme informatique comprenant des instructions de programme informatique, les instructions de programme informatique, lorsqu'elles sont exécutées par un ordinateur, amenant l'ordinateur à mettre en oeuvre le procédé selon selon l'une quelconque des revendications 1 à 3.
